# FASCICULE DE BREVET EUROPEEN

(11) **EP 2 355 921 B1**
(45) Date de publication et mention de la délivrance du brevet: **05.03.2014**
(21) Numéro de dépôt: 09803818.5
(22) Date de dépôt: 08.12.2009
(51) Int. Cl.: B01F 5/06, C02F 1/32, C02F 1/34, C02F 101/36

(54) **PROCÉDÉ ET DISPOSITIF DE TRAITEMENT D'AU MOINS UN COMPOSÉ TRANSPORTÉ DANS UN LIQUIDE**
VERFAHREN UND VORRICHTUNG ZUR BEHANDLUNG MINDESTENS EINER IN EINER FLÜSSIGKEIT TRANSPORTIERTEN VERBINDUNG
METHOD AND DEVICE FOR TREATING AT LEAST ONE COMPOUND CARRIED IN A LIQUID

(30) Priorité: 09.12.2008 FR 0858405
(43) Date de publication de la demande: 17.08.2011
(73) Titulaire: Lecoffre, Yves, 38000 Grenoble (FR); RC-Lux, 38240 Meylan (FR)
(72) Inventeur: LECOFFRE, Yves, 38000 Grenoble (FR)
(74) Mandataire: Casalonga, Axel
(86) Numéro de dépôt international: PCT/FR2009/052434
(87) Numéro de publication internationale: WO 2010/066999

(56) Documents cités:
- DE-A1- 3 728 946
- JP-A- 11 042 432
- JP-A- 2008 207 099
- US-A- 4 585 357
- US-A1- 2006 256 645
- US-B1- 6 200 486

## Description

La présente invention concerne le domaine du traitement de composés, tels que des composés ou des espèces chimiques ou organiques ou des micro-organismes.

Des composés chimiques indésirables se rencontrent très souvent dans les eaux polluées, par exemple par des composés volatils tels les hydrocarbures ou les composés chlorés (Trichloréthylène par exemple) ou par des composés peu volatils comme les PCB (Polychlorobiphényle) des PCP (Pentachlorophénol) utilisés comme fongicides ou certaines molécules considérées comme des perturbateurs endocriniens. Ces corps sont le plus souvent cancérigènes et sont à l'origine de troubles chez les animaux et les hommes.

Actuellement, la destruction ou le transfert de ces corps indésirables se font en utilisant plusieurs techniques dont l'adsorption sur charbon actif, la thermolyse, la réduction électrolytique, l'irradiation par rayonnements ultraviolets ou l'oxydation par composés chimiques comme l'ozone, le peroxyde ou le réactif de Fenton. Certains traitements associent plusieurs de ces procédés élémentaires. Dans tous les cas, il s'agit de procédés onéreux et de mise en oeuvre délicate.

L'eau peut également contenir des micro-organismes vivants tels que des bactéries ou des algues microscopiques. Il est souvent souhaitable de les détruire pour éviter des effets pathologiques. Cette destruction se fait avec des techniques équivalentes à celles utilisées pour les composés chimiques, par exemple par stérilisation par le chlore ou le peroxyde, ou par irradiation par rayonnements ultra violets.

Pour effectuer certains traitements, il a aussi été proposé l'usage d'ondes ultrasoniques émises dans des liquides à traiter et/ou l'usage de la cavitation à l'intérieur des liquides à traiter s'écoulant dans des tubes de venturi ou dans des tubes équivalents à écoulement axial. De tels dispositions sont décrites dans les documents EP 1 738 775, US 2007/0280861, WO2005/028375).

Les documents US 5 749 650, US 5 899 564 et US 2006/256645 décrivent des dispositifs de traitement dans lesquels le liquide passe radialement au travers de micro-fentes annulaires aménagées entre des couronnes axialement superposées et réglables axialement. Le liquide s'échappe des fentes en formant des jets radiaux qui se dispersent dans des grands espaces périphériques d'évacuation, ces jets produisant des turbulences dans ces espaces, sans formation de poche de cavitation.

Le document US 6 200 486 décrit un dispositif qui comprend une paroi cylindrique intérieure présentant des orifices et une paroi cylindrique extérieure, formant entre elles un grand espace. Comme dans les documents cités dans le paragraphe qui précède, l'écoulement à la sortie des orifices se présente sous la forme de jets dans ce grand espace.

Le document US 4 585 357 décrit un dispositif qui comprend une micro-fente radiale en face de laquelle est installée, à grande distance, une paroi de déviation. Là également, l'écoulement au travers de la fente produit des jets de dispersion.

Le document JP 11 42432 décrit un dispositif dans lequel deux écoulements opposés se collisionnent. L'écoulement résultant s'écoule radialement et est déchargé dans une chambre périphérique d'évacuation, là également sous forme de jets de dispersion.

Le document DE 3728946 décrit un dispositif dans lequel un écoulement axial est dévié vers une chambre radiale qui présente une ouverture périphérique. Cette chambre est tronconique et formée de façon à ce que son épaisseur se réduise en allant vers l'extérieur. Des effets de turbulences se produisent uniquement au-delà de l'ouverture périphérique de la chambre radiale, dans la grande chambre d'évacuation.

Le document JP 2008/207099 décrit un dispositif dans lequel le liquide est introduit axialement dans un trou borgne et est évacué par des canaux radiaux tronconiques divergents aménagés dans la paroi du trou borgne, à distance du fond. Il s'agit en fait, dans chaque canal radial tronconique divergent d'un fonctionnement de type Venturi, axialement à ce canal.

La présente invention a pour but de produire une cavitation particulière apte à améliorer les effets mécaniques et/ou chimiques et/ou bactériologiques et/ou sur les micro-organismes, sur le ou les composés transportés dans un liquide à traiter.

Pour cela, la présente invention est basée sur une cavitation qui engendre la formation de bulles ou poches de vapeur dans un liquide sous l'effet de dépressions et dans laquelle les bulles ou poches de vapeur produites pendant cette mise en dépression se condensent ensuite brutalement lorsque la pression remonte. Sous certaines conditions, cette condensation rapide, également appelée collapse, s'effectue dans des durées comprises par exemple entre un dix millième de seconde et une microseconde selon la dimension initiale de la bulle ou de la poche, cette réaction pouvant être suffisamment rapide pour que les gaz se compriment et s'échauffent jusqu'à des températures supérieures par exemple à 2000°C, produisant ainsi un plasma.

C'est ainsi que la présente invention cherche en particulier à accroître les effets combinés de la turbulence intense qui règne dans la zone de collapse des bulles ou poches de cavitation et des vitesses très élevées de la paroi de ces dernières ; et/ou à accroître les effets résultant du plasma produit dans les bulles ou poches de cavitation et apte notamment à produire des rayonnements dans le liquide ; et/ou à détruire des composés présents dans les bulles ou poches de cavitation ; et/ou à engendrer la production de molécules, d'ions ou d'espèces ou de radicaux chimiques susceptibles de migrer dans le liquide et d'agir sur les composés que le liquide transporte ; et/ou à produire des ondes sonores intenses dans le liquide.

La présente invention a tout d'abord pour objet un procédé de traitement d'un composé, tel qu'un composé chimique et/ou organique et/ou un micro-organisme, transporté par un liquide.

Ce procédé est tel que deux faces substantiellement radiales disposées en vis-à-vis délimitent entre elles une chambre radiale de cavitation, l'une desdites faces présentant un orifice axial d'entrée aménagé axialement dans sa partie centrale et lesdites faces formant une ouverture périphérique de sortie ; que le liquide, amené axialement par l'orifice axial d'entrée, est dévié et s'écoule dans ladite chambre radiale de cavitation selon diverses directions radiales vers l'ouverture périphérique de sortie ; et que l'épaisseur de ladite chambre de cavitation (18), entre lesdites faces radiales, est choisie de façon à être comprise entre 0,1 et 0,25 fois le diamètre dudit orifice axial d'entrée, préférentiellement 0,14.

Ainsi, les conditions de l'écoulement du liquide génèrent des bulles ou poches de cavitation dans la première partie de l'écoulement radial, autour de l'orifice central d'entrée. Ainsi également, les bulles ou poches de cavitation implosent avant d'atteindre l'ouverture périphérique de sortie, afin de traiter au moins partiellement ledit composé dans ladite chambre de cavitation.

La distance entre l'axe dudit orifice central d'entrée et ladite ouverture périphérique de ladite chambre de cavitation peut être choisie de façon à être supérieure à deux fois le diamètre dudit orifice central d'entrée.

Le rapport entre la pression absolue en amont de ladite chambre de cavitation et la pression en aval de cette chambre peut être compris entre 1,5 et 6.

La présente invention a également pour objet un dispositif de traitement d'au moins un composé, tel qu'un composé chimique et/ou organique et/ou un micro-organique, transporté par un liquide.

Ce dispositif comprend un premier élément présentant une face substantiellement radiale et un orifice substantiellement axial d'entrée du liquide et un second élément présentant une face substantiellement radiale.

Lesdites faces radiales sont disposées en vis-à-vis de façon à former entre elle un espace formant une chambre radiale de cavitation présentant une ouverture périphérique de sortie, ledit orifice axial d'entrée du premier élément débouchant dans une partie centrale de cette chambre de cavitation en face de ladite face radiale du second élément.

L'épaisseur de ladite chambre de cavitation, entre lesdites faces radiales, est comprise entre 0,1 et 0,25 fois le diamètre dudit orifice axial d'entrée, préférentiellement 0,14.

Ainsi, le liquide, amené axialement par l'orifice axial d'entrée, est dévié dans la partie centrale d'entrée et s'écoule dans ladite chambre radiale de cavitation selon diverses directions radiales vers l'ouverture périphérique de sortie et les conditions de l'écoulement du liquide génèrent des bulles ou poches de cavitation dans la première partie de cet écoulement, autour de l'orifice central d'entrée, et que les bulles ou poches de cavitation implosent avant d'atteindre l'ouverture périphérique de sortie, afin de traiter au moins partiellement ledit composé.

Lesdites faces radiales délimitant ladite chambre radiale de cavitation peuvent être parallèles.

La distance entre l'axe de l'orifice central d'entrée et ladite ouverture périphérique de ladite chambre de cavitation peut être supérieure à deux fois le diamètre dudit orifice central d'entrée.

Ladite ouverture périphérique de sortie de ladite chambre radiale de cavitation peut communiquer avec une chambre secondaire reliée à au moins un passage de sortie.

Un autre moyen de traitement peut être associé à ladite chambre secondaire, en particulier un moyen d'émission générant un rayonnement ultraviolet dans ladite chambre secondaire.

Le premier élément et le second élément peuvent comprendre deux parois ménageant entre elles un espace, l'une des parois présentant une pluralité d'orifices d'entrée du liquide et l'autre paroi présentant une pluralité d'orifices de sortie, de façon à former, dans ledit espace et entre lesdits orifices d'entrée et lesdits orifices de sortie, une pluralité de chambres de cavitation.

Lesdits orifices d'entrée peuvent déboucher dans une chambre collectrice d'entrée et les orifices de sortie peuvent déboucher dans une chambre collectrice de sortie, lesdites parois pouvant être annulaires et concentriques, préférentiellement cylindriques ou concentriques, ou plates.

Ledit premier élément peut présenter un chanfrein sur le bord dudit orifice axial d'entrée, ce chanfrein pouvant être arrondi et présenter un rayon compris entre 0,1 et 0,5 fois la distance entre lesdites faces radiales dans la partie centrale de la chambre de cavitation ou être tronconique en étant disposé selon un angle compris entre 30° et 60°, préférentiellement à 45°, et sur une hauteur, selon l'axe dudit orifice axial d'entrée, comprise entre 0,1 et 0,5 fois la distance entre lesdites faces radiales dans la partie centrale de la chambre de cavitation.

La présente invention sera mieux comprise à l'étude de dispositifs de traitement à chambre de cavitation, décrits à titre d'exemples non limitatifs et illustrés par le dessin sur lequel :
- la figure 1 représente une coupe longitudinale d'un dispositif de traitement ;
- la figure 2 représente une coupe transversale selon II-II du dispositif de traitement de la figure 1 ;
- la figure 3 représente une coupe radiale agrandie de la chambre de cavitation du dispositif de traitement de la figure 1 ;
- la figure 4 représente une coupe longitudinale d'une variante de réalisation du dispositif de traitement ;
- la figure 5 représente une coupe radiale selon V-V du dispositif de traitement de la figure 4 ;
- la figure 6 représente une coupe longitudinale d'une variante du dispositif de traitement ;
- la figure 7 représente une vue latérale intérieure du dispositif de traitement de la figure 6 ;
- la figure 8 représente une coupe radiale agrandie de la partie centrale de la chambre de cavitation, selon une variante de réalisation ; et
- la figure 9 représente une coupe radiale agrandie de la partie centrale de la chambre de cavitation, selon une autre variante de réalisation.

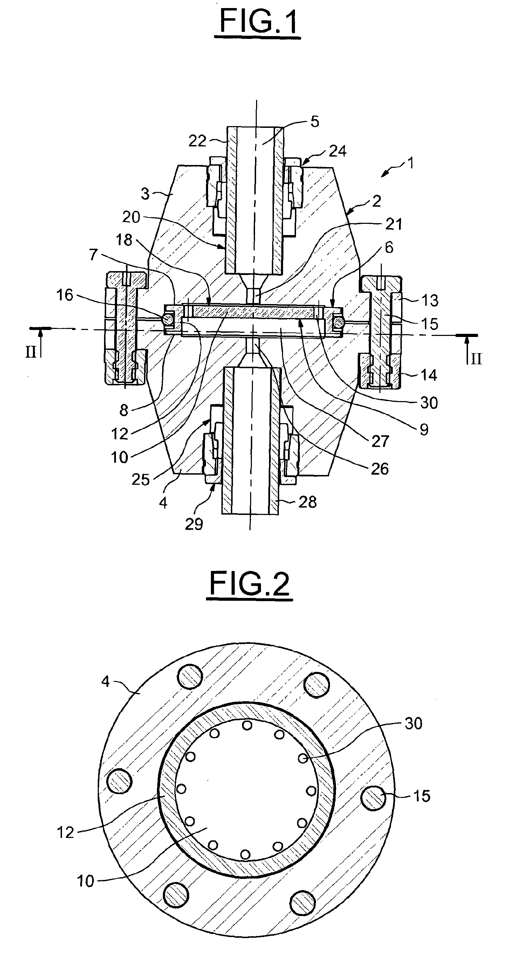

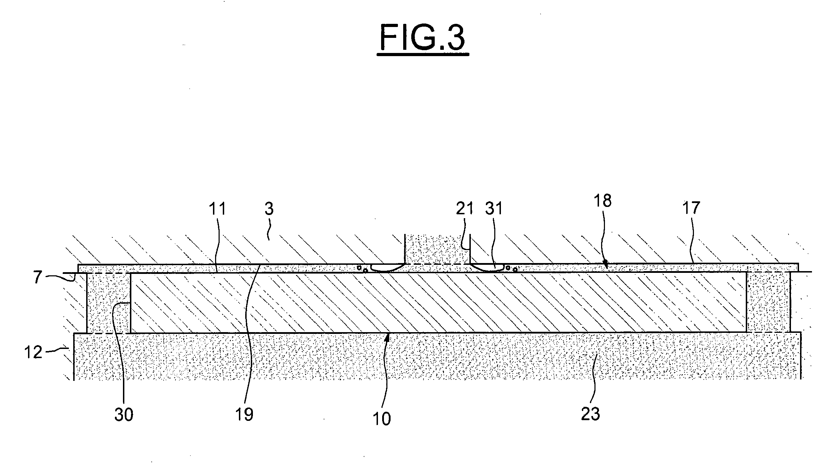

Un dispositif de traitement 1 représenté sur les figures 1 à 3 comprend un carter 2 qui comprend deux coques opposées 3 et 4 présentant un axe vertical 5 et délimitant entre elles une cavité radiale 6 qui est formée entre une face radiale annulaire 7 de la coque 3 et une face radiale annulaire 8 de la coque 4. Les coques 3 et 4 peuvent être identiques et placées à l'opposé l'une de l'autre.

Dans la cavité radiale 6 est disposée une entretoise 9 qui comprend un disque 10 qui présente une face radiale 11 en appui sur la face radiale annulaire 7 de la coque 3 et qui comprend une partie périphérique cylindrique 12 en saillie par rapport au disque 10 et en appui sur la face radiale annulaire 8 de la coque 4.

Les coques 3 et 4 présentent des parties périphériques adjacentes 13 et 14 reliées par des boulons 15 pour les fixer entre elles et maintenir les appuis ci-dessus.

Un joint annulaire d'étanchéité 16 est installé entre la périphérie de la partie périphérique cylindrique 12 de l'entretoise 9 et la périphérie de la cavité 6, dans la zone annulaire des faces radiales en vis-à-vis des parties périphériques adjacentes 13 et 14 des coques 3 et 4.

A l'intérieur de sa face radiale annulaire 7, la coque 3 (premier élément) présente un évidement 17 qui délimite, avec la face radiale 11 du disque 10 (second élément), une chambre de cavitation 18, le fond 19 de l'évidement 17 s'étendant radialement, parallèlement à la face radiale 11 du disque 10.

La coque 3 présente un passage axial 20 qui présente un orifice central terminal 21, par exemple cylindrique, qui débouche axialement dans la partie centrale de la chambre de cavitation 18, au travers de la face radiale constituée par le fond 19 de l'évidement 17. Dans le passage 20 est engagée et fixée de façon étanche l'extrémité du conduit 22 d'amenée d'un liquide 23, par exemple par un système de presse-étoupe annulaire 24.

La coque 4 présente un passage axial 25 qui débouche axialement, par exemple par un orifice central terminal 26, dans la partie centrale de la chambre secondaire 27 formée dans l'entretoise 9, à l'opposé de la chambre radiale de cavitation 18. Dans le passage 25 est engagée et fixée de façon étanche l'extrémité du conduit 28 d'évacuation du liquide 23, par exemple par un système de presse-étoupe annulaire 29.

Le disque 10 de l'entretoise 9 présente une pluralité de passages traversants 30 qui débouchent d'une part dans la périphérie de la chambre radiale de cavitation 18 et d'autre part dans la chambre secondaire 27. Les passages traversants 30 sont régulièrement répartis sur une circonférence de façon à constituer une ouverture périphérique de sortie de la chambre radiale de cavitation 18. Ces passages traversants 30 peuvent être formés par des trous cylindriques ou des fentes circonférentielles.

Ainsi, le liquide 23, amené par le conduit d'amenée 22, est introduit dans la partie centrale de la chambre radiale de cavitation 18 par l'orifice central 21, puis est dévié radialement dans cette partie centrale, puis s'écoule dans la chambre radiale de cavitation 18 selon diverses directions radiales vers l'ouverture périphérique de sortie constituée par les passages traversants 30. Puis, le liquide issu des passages traversants 30 est collecté dans la chambre secondaire 27, puis évacué par le conduit d'évacuation 28.

Les conditions de l'écoulement radial du liquide 23 dans la chambre radiale de cavitation 18, depuis l'orifice central d'entrée 21 jusqu'aux passages traversants périphériques 30, sont telles que cet écoulement est hydrodynamique, que des bulles ou poches de cavitation 31 apparaissent dans la première partie de cet écoulement, autour de l'orifice central d'entrée 21, puis se collapsent ou implosent immédiatement, avant, de préférence bien avant, que ces bulles ou poches de cavitation 31 n'atteignent les passages traversants périphériques de sortie 30.

Le phénomène de création et de collapse des bulles ou poches de cavitation résulte des effets de dépressions suivies immédiatement de surpressions. Lors de la création des bulles, des gaz dissous dans le liquide tendent à se libérer dans ces bulles. Lors du collapse, il se produit une compression adiabatique qui engendre des températures très élevées et des pressions très élevées dans les bulles qui implosent.

La cavitation produite est une cavitation hydrodynamique qui résulte de l'accélération de l'écoulement en raison d'une diminution de sa section de passage suivie d'une augmentation progressive de ladite section de passage selon une direction quasi radiale. Cette cavitation permet de créer une remontée en pression très brutale dans la zone de condensation ou collapse, ce qui a pour effet d'accroître l'intensité des effets ci-dessus décrits pour une vitesse d'écoulement donnée. De plus, la forme particulière de ce dispositif fait que le phénomène est produit avec une perte de pression et donc une dépense énergétique minimale.

Les poches ou bulles de cavitation 31 peuvent comprendre une poche ou bulle principale annulaire très voisine de l'orifice d'entrée 21 et collée à ou située contre la face radiale 19 de la coque 3, alimentée en gaz dissous par le liquide qui s'écoule. Cette poche ou bulle principale annulaire se divise en poches ou bulles de tailles plus petites qui s'éloignent du centre de la chambre et qui se condensent, collapsent ou implosent.

Grâce au dispositif de traitement 1, les bulles ou poches de cavitation 31 produites sont aptes à traiter au moins partiellement le ou les composés transportés par le liquide. Ce traitement peut être d'ordre chimique, d'ordre thermique, d'ordre chimique et thermique et/ou éventuellement d'ordre sonique car le phénomène de cavitation peut éventuellement produire des ondes soniques rayonnant dans le liquide.

La formation contre la paroi 19 et le collapse des bulles ou poches de vapeur 31 peuvent être localisés de façon quasiment prédéterminée et/ou peuvent être contrôlés. Du fait de l'épaisseur adaptée de la chambre radiale de cavitation 18 par rapport aux bulles ou poches de cavitation 31 produites, la cavitation intéresse tout le liquide à traiter s'écoulant dans cette chambre 18.

Dans le cas où le liquide tel que de l'eau transporte un ou des composés chimiques, il peut se former des radicaux ou espèces chimiques spécifiques dans les bulles de cavitation 31 produites et se collapsant, ces radicaux ou espèces chimiques spécifiques étant aptes à réagir avec ces composés chimiques et produire d'autres composés. Les effets chimiques peuvent produire la destruction de composés présents dans les bulles, en général des composés volatils initialement dissous dans le liquide par production de molécules, ions ou radicaux susceptibles de migrer dans le liquide et d'avoir une action sur les composés qu'il transporte. Parmi ces actions, l'oxydation par les radicaux OH° permet de détruire des molécules dissoutes difficiles à éliminer.

Dans le cas où le liquide tel que de l'eau transporte un ou des micro-organismes, les bulles de cavitation 31 produites peuvent permettre d'attaquer ces micro-organismes et/ou des films ou amas de ces derniers, pour les détruire, les disperser ou les disloquer par effets chimiques, mécaniques ou par des ondes de pression intense.

Les conditions d'écoulement du liquide dans la chambre de cavitation 18 du dispositif de traitement 1 peuvent résulter d'un dimensionnement suivant.

L'épaisseur de la chambre de cavitation 18, entre les faces radiales opposées 7 et 19, peut être comprise entre 0,1 et 0,25 fois le diamètre de l'orifice central d'amenée 21.

L'épaisseur de la chambre de cavitation 18 peut en particulier être égale à 0,14 fois le diamètre de l'orifice central d'amenée 21.

La distance entre l'axe 5 de l'orifice central d'amenée 21 et la circonférence sur laquelle est formée l'ouverture périphérique de la chambre de cavitation 18 déterminée par les passages traversants 30 peut être supérieure à 2.5 fois le diamètre de l'orifice central d'amenée 21

Le rapport entre la pression d'entrée et la pression de sortie peut être compris entre 1,5 et 6.

Dans un exemple de réalisation, le diamètre de l'orifice d'amenée 21 peut être égal à 8 mm, l'épaisseur de la chambre de cavitation 18 peut être égale à 1,12 mm, la distance entre l'axe 5 de l'orifice central d'amenée 21 et la circonférence sur laquelle est formée l'ouverture périphérique de la chambre de cavitation 18 déterminée par les passages traversants 30 peut être égale à 30 mm.

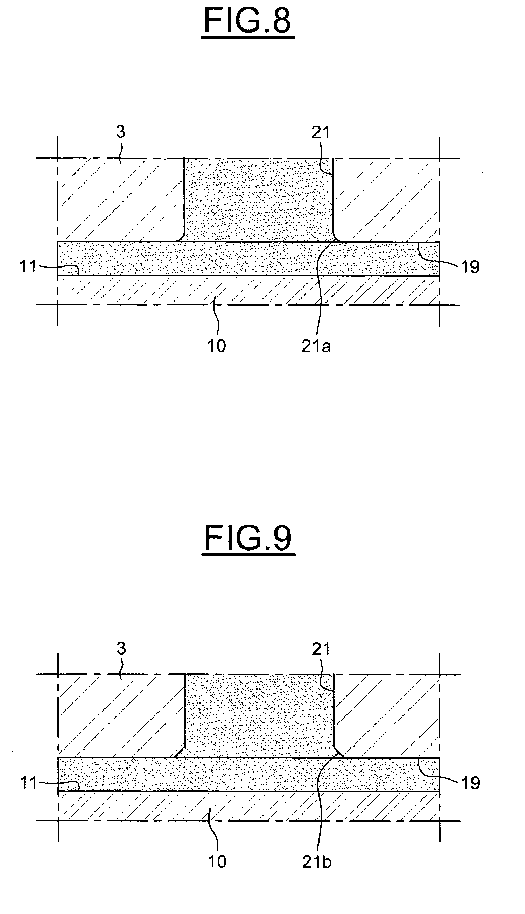

Selon une variante de réalisation représentée sur la figure 8, ledit premier élément 3 peut présenter un chanfrein arrondi 21a aménagé sur le bord de l'orifice axial d'entrée 21 et rejoignant la face 17. Ce chanfrein arrondi 21a peut présenter un rayon r compris entre 0,1 et 0,5 fois la distance entre les faces radiales 11 et 19 dans la partie centrale de la chambre de cavitation 18.

Selon une autre variante de réalisation représentée sur la figure 9, ledit premier élément 3 peut présenter un chanfrein tronconique 21b aménagé sur le bord de l'orifice axial d'entrée 21. Ce chanfrein tronconique 21b peut être disposé selon un angle compris entre 30° et 60°, préférentiellement à 45°. Sa hauteur h, selon l'axe de l'orifice axial d'entrée 21, peut être comprise entre 0,1 et 0,5 fois la distance entre les faces radiales 11 et 19 dans la partie centrale de la chambre de cavitation 18.

Les chanfreins 21a ou 21b peuvent faciliter la formation de la poche de cavitation 31 à leur périphérie.

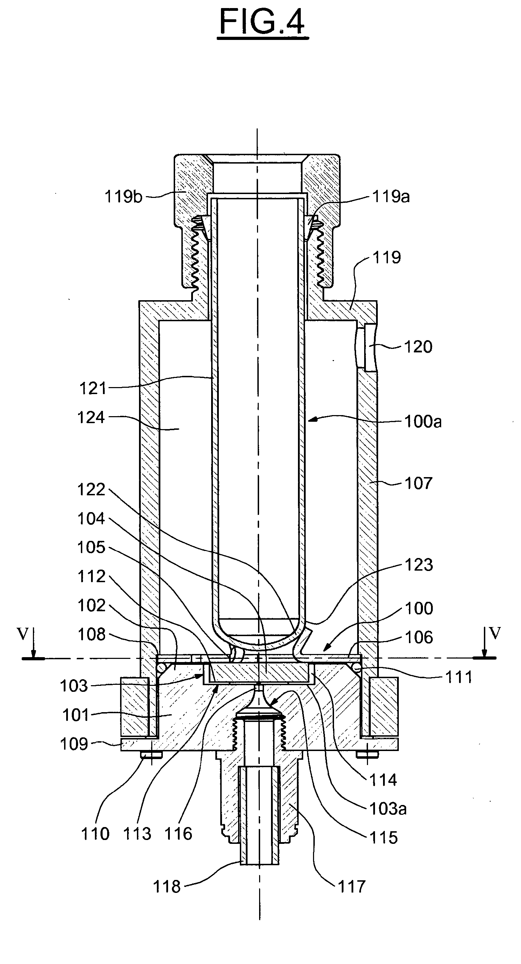

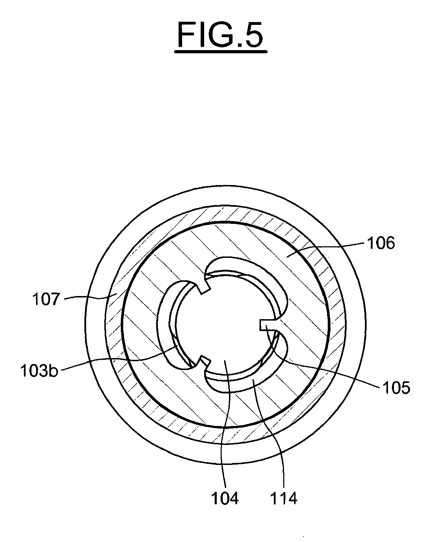

En se reportant aux figures 4 et 5, on peut voir qu'on a représenté un autre dispositif de traitement 100 qui comprend un cylindre 101 (premier élément) qui présente une face frontale radiale 102 dans laquelle est ménagé un évidement cylindrique 103 et qui comprend un disque circulaire 104 (second élément) engagé à distance dans l'évidement cylindrique 103 et fixé axialement contre trois doigts intérieurs 105 d'une rondelle circulaire 106 en appui sur la face frontale radiale 102 du cylindre 101.

L'empilage constitué par le cylindre 101 et la rondelle circulaire 106 est engagé dans l'extrémité d'un tube cylindrique extérieur 107 de telle sorte que la rondelle soit en appui sur un épaulement intérieur 108 de ce tube 107. Le cylindre 101 présente un épaulement périphérique 109 et des vis de fixation 110 traversent cet épaulement et sont vissées dans le tube cylindrique 107 pour fixer cet empilage. Un joint annulaire d'étanchéité 111 assure l'étanchéité entre ledit empilage et le tube cylindrique 107.

Le disque circulaire 104 est placé dans l'évidement cylindrique 103 de telle sorte qu'une face radiale 112 de ce disque 104 et le fond radial 103a de cet évidement 103 forment entre eux une chambre de cavitation 113 d'épaisseur constante et que la périphérie du disque 104 et la périphérie de l'évidement 103 déterminent entre elles un passage traversant annulaire 114 déterminant une ouverture périphérique de la chambre de cavitation 113 et débouchant à l'intérieur du tube 107, entre les doigts intérieurs 105 de la rondelle circulaire 106.

Afin d'assurer une épaisseur constante de la chambre de cavitation 113, le fond radial 103a de l'évidement 103 est pourvu de bossages en saillie 103b contre lesquels la face radiale 112 du disque 104 est en appui, ces bossages 103b étant placés à la périphérie de façon à ne pas nuire à l'écoulement du liquide. Les bossages 103b assurent également le centrage du disque 104 dans l'évidement 103.

Le cylindre 101 présente un passage axial 115 qui présente un orifice central terminal 116, par exemple cylindrique, qui débouche axialement dans la partie centrale de la chambre de cavitation 113. Dans le passage 115 est vissé un embout 117 dans lequel est fixée de façon étanche l'extrémité du conduit 118 d'amenée d'un liquide.

La structure ainsi constituée est telle que la chambre de cavitation 113 est équivalente à la chambre de cavitation 18 du dispositif de traitement 1.

Le dispositif de traitement 100 peut avantageusement être suivi d'un autre dispositif de traitement 100a comme décrit ci-dessous.

L'autre extrémité du tube cylindrique 107 est fermée par une paroi radiale 119 et présente une ouverture latérale de sortie 120 au voisinage de cette paroi 119. Un conduit non représenté peut être branché sur l'ouverture latérale de sortie 120 pour évacuer le liquide traité.

La paroi 119 est traversée de façon étanche, grâce à un joint 119a tenu par un manchon 119b par un tube cylindrique axial intérieur 121, par exemple en quartz, dont une extrémité fermée 122 est située à proximité du disque circulaire 104, les doigts intérieurs 105 de la rondelle circulaire 106 étant prolongés par des ergots 123 de centrage et de maintien de l'extrémité 122 du tube cylindrique intérieur 121.

Le tube intérieur 121 est relié à des moyens connus, non représentés, aptes à générer dans ce tube 121 un rayonnement ultraviolet rayonnant dans la chambre annulaire 124 formée entre le tube extérieur 107 et le tube intérieur 120.

Ainsi, un liquide tel que de l'eau transportant un ou des composés à traiter est, dans une première étape, traité par le dispositif de traitement 100 puis immédiatement, dans une seconde étape, traité par le dispositif de traitement 100a, dans la chambre secondaire annulaire 124 par le rayonnement ultraviolet généré par le tube intérieur 120, puis évacué par l'ouverture latérale de sortie 120. Le rayonnement rayonne dans toute la chambre secondaire annulaire 124. Le disque 104 étant en quartz, le rayonnement peut aussi atteindre le passage traversant annulaire 114 et la chambre de cavitation 113.

Une telle disposition est particulièrement avantageuse lorsqu'il s'agit de détruire des micro-organismes transportés par de l'eau afin de traiter cette dernière et de la rendre moins polluée.

Dans une variante, le moyen pour générer un rayonnement pourrait être placé autour du tube extérieur 107.

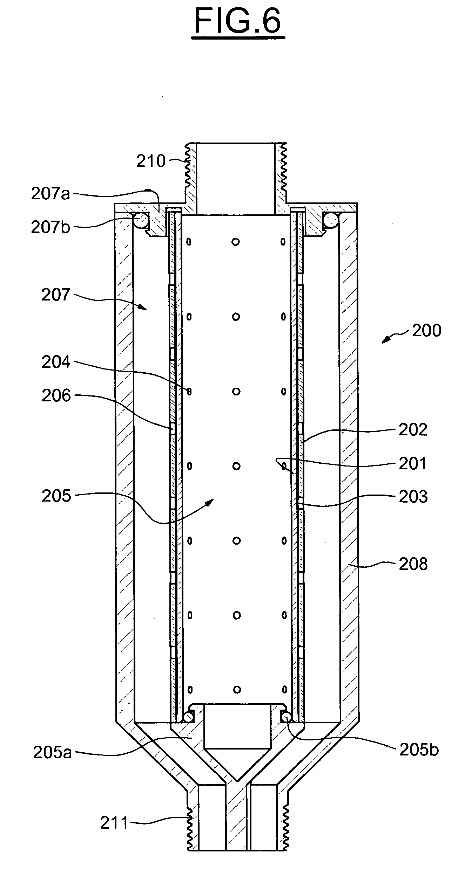

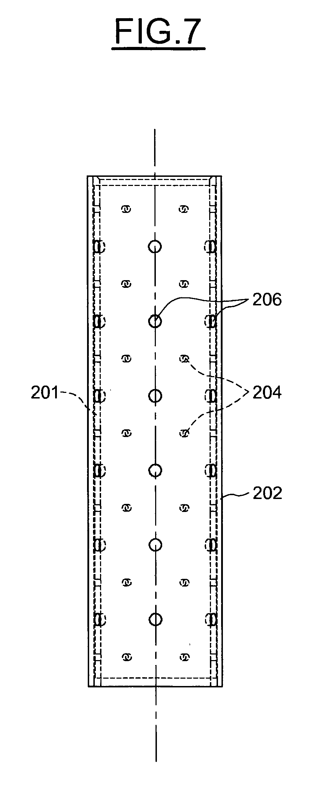

A titre de variante illustrée sur les figures 6 et 7, un dispositif de traitement 200 comprend une paroi cylindrique intérieure 201 et une paroi cylindrique extérieure 202, qui sont concentriques et qui délimitent entre elles un espace cylindrique 203 d'épaisseur constante fermé à ses extrémités par tous moyens connus.

La paroi cylindrique intérieure 201 présente une pluralité d'orifices d'entrée 204 débouchant d'une part dans l'espace 203 et d'autre part dans l'espace intérieur 205 de cette paroi 201, cet espace intérieur 205 formant une chambre longitudinale collectrice d'entrée.

La paroi cylindrique extérieure 202 présente une pluralité d'orifices de sortie 206 débouchant d'une part dans l'espace 203 et d'autre part dans un espace périphérique 207 délimité par une paroi périphérique cylindrique 208, l'espace périphérique 207 formant une chambre annulaire longitudinale collectrice de sortie.

Les orifices de sortie 206 sont répartis autour et à distance des orifices d'entrée 204 de façon à former une pluralité de chambres substantiellement radiales de cavitation 209 à écoulements substantiellement parallèles, fonctionnant respectivement comme les chambres de cavitation décrites dans les exemples qui précèdent.

Dans l'exemple représenté, comme le montre plus précisément la figure 7, les orifices d'entrée 204 sont répartis à égales distances les uns des autres, tout autour de la paroi cylindrique intérieure 201 et longitudinalement à cette dernière, et les orifices de sortie 206 sont répartis à égales distances les uns des autres, tout autour de la paroi cylindrique extérieure 202 et longitudinalement à cette dernière, en étant décalés d'un demi-pas par rapport aux orifices d'entrée 204, circonférentiellement et longitudinalement. Les orifices de sortie 206 présentent avantageusement des sections largement supérieures aux sections des orifices d'entrée 204.

Dans l'exemple représenté, comme le montre plus précisément la figure 6, l'espace intérieur 205 formant une chambre collectrice d'entrée est fermé à une extrémité par une paroi radiale 205a et peut communiquer à son autre extrémité avec un conduit axial d'entrée 210 apte à être relié à une source de liquide à traiter. L'espace périphérique 207 formant une chambre collectrice de sortie est fermé à une extrémité par une paroi annulaire 207a et peut communiquer avec un conduit axial 211 de sortie du liquide traité en parallèle dans les chambres de cavitation 209, ce conduit axial de sortie 211 étant opposé au conduit axial d'entrée 210. Les parois cylindriques intérieure et extérieure 201 et 202 sont portées à une extrémité par la paroi 205a et à l'autre extrémité par la paroi 207a, de façon étanche grâce à des joints annulaires 205b et 207b.

Dans d'autres variantes, les parois 201 et 202 pourraient présenter d'autres formes annulaires, par exemple être tronconiques, ou pourraient être plates.

Dans une autre variante, des dispositifs de traitement, selon l'un quelconque de ceux qui viennent d'être décrits, pourraient être mis en série, la sortie de liquide de l'un étant en communication avec l'entrée de liquide du suivant.

## Revendications

1. Procédé de traitement d'un composé, tel qu'un composé chimique et/ou organique et/ou un micro-organisme, transporté par un liquide,
dans lequel deux faces substantiellement radiales (11, 19) disposées en vis-à-vis délimitent entre elles une chambre radiale de cavitation (18), l'une desdites faces présentant un orifice axial d'entrée (21) aménagé axialement dans sa partie centrale et lesdites faces formant une ouverture périphérique de sortie (30) ;
dans lequel le liquide, amené axialement par l'orifice axial d'entrée (21), est dévié et s'écoule dans ladite chambre radiale de cavitation (18) selon diverses directions radiales vers l'ouverture périphérique de sortie (30) ;
et dans lequel l'épaisseur de ladite chambre de cavitation (18), entre lesdites faces radiales (11, 19), est choisie de façon à être comprise entre 0,1 et 0,25 fois le diamètre dudit orifice axial d'entrée (21), préférentiellement 0,14 ;
de telle sorte que les conditions de l'écoulement du liquide génèrent des bulles ou poches de cavitation (31) dans la première partie de l'écoulement radial, autour de l'orifice central d'entrée (21) et que les bulles ou poches de cavitation (31) implosent avant d'atteindre l'ouverture périphérique de sortie (30), afin de traiter au moins partiellement ledit composé dans ladite chambre de cavitation (18).

2. Procédé selon la revendication 1, dans lequel la distance entre l'axe (5) de l'orifice central d'entrée (21) et ladite ouverture périphérique de ladite chambre de cavitation (18) est choisie de façon à être supérieure à deux fois le diamètre dudit orifice central d'entrée (21).

3. Procédé selon l'une des revendications 1 et 2, dans lequel le rapport entre la pression absolue en amont de ladite chambre de cavitation (18) et la pression en aval de cette chambre est compris entre 1,5 et 6.

4. Dispositif de traitement d'au moins un composé, tel qu'un composé chimique et/ou organique et/ou un micro-organisme, transporté par un liquide, comprenant :
un premier élément (3) présentant une face substantiellement radiale (18) et un orifice substantiellement axial (21) d'entrée du liquide et un second élément (10) présentant une face substantiellement radiale (11),
dans lequel lesdites faces radiales sont disposées en vis-à-vis de façon à former entre elle un espace formant une chambre radiale de cavitation (18) présentant une ouverture périphérique de sortie (30), ledit orifice axial d'entrée du premier élément débouchant dans une partie centrale de cette chambre de cavitation (18) en face de ladite face radiale (11) du second élément (10) ;
l'épaisseur de ladite chambre de cavitation (18), entre lesdites faces radiales (11, 19), est comprise entre 0,1 et 0,25 fois le diamètre dudit orifice axial d'entrée (21), préférentiellement 0,14 ;
de telle sorte que le liquide, amené axialement par l'orifice axial d'entrée (21), est dévié dans la partie centrale d'entrée et s'écoule dans ladite chambre radiale de cavitation (18) selon diverses directions radiales vers l'ouverture périphérique de sortie (30) et de telle sorte que les conditions de l'écoulement du liquide génèrent des bulles ou poches de cavitation (31) dans la première partie de cet écoulement, autour de l'orifice central d'entrée (21), et que les bulles ou poches de cavitation (31) implosent avant d'atteindre l'ouverture périphérique de sortie (30), afin de traiter au moins partiellement ledit composé.

5. Dispositif selon la revendication 4, dans lequel lesdites faces radiales (11, 19) délimitant ladite chambre radiale de cavitation (18) sont parallèles.

6. Dispositif selon l'une des revendications 4 et 5, dans lequel la distance entre l'axe (5) de l'orifice central d'entrée (21) et ladite ouverture périphérique de ladite chambre de cavitation (18) est supérieure à deux fois le diamètre dudit orifice central d'entrée (21).

7. Dispositif selon l'une quelconque des revendications 4 à 6, dans lequel ladite ouverture périphérique de sortie de ladite chambre radiale de cavitation (18) communique avec une chambre secondaire (124) reliée à au moins un passage de sortie (120).

8. Dispositif selon la revendication 7, comprenant un autre moyen de traitement (121) associé à ladite chambre secondaire, en particulier un moyen d'émission générant un rayonnement ultraviolet dans ladite chambre secondaire.

9. Dispositif selon l'une quelconque des revendications 7 à 8, dans lequel le premier élément et le second élément comprennent deux parois (201, 202) ménageant entre elles un espace, l'une des parois présentant une pluralité d'orifices (204) d'entrée du liquide et l'autre paroi présentant une pluralité d'orifices (206) de sortie, de façon à former, dans ledit espace et entre lesdits orifices d'entrée et lesdits orifices de sortie, une pluralité de chambres de cavitation (209).

10. Dispositif selon la revendication 9, dans lequel lesdits orifices d'entrée débouchent dans une chambre collectrice d'entrée (205) et les orifices de sortie débouchent dans une chambre collectrice de sortie (207), lesdites parois pouvant être annulaires et concentriques, préférentiellement cylindriques ou concentriques, ou plates.

11. Dispositif selon l'une quelconque des revendications 4 à 10, dans lequel ledit premier élément (3) présente un chanfrein sur le bord dudit orifice axial d'entrée (21), ce chanfrein étant arrondi et présentant un rayon compris entre 0,1 et 0,5 fois la distance entre lesdites faces radiales (11, 19) dans la partie centrale de la chambre de cavitation (18) ou étant tronconique en étant disposé selon un angle compris entre 30° et 60°, préférentiellement à 45°, et sur une hauteur, selon l'axe dudit orifice axial d'entrée (21), comprise entre 0,1 et 0,5 fois la distance entre lesdites faces radiales (11, 19) dans la partie centrale de la chambre de cavitation (18).

## Patentansprüche

1. Verfahren zur Behandlung einer Verbindung, wie eine chemische und/oder organische Verbindung und/oder ein Mikroorganismus, die von einer Flüssigkeit transportiert wird,
wobei zwei einander gegenüber angeordnete, im Wesentlichen radiale Seiten (11, 19) zwischen sich eine radiale Kavitationskammer (18) begrenzen, wobei eine der Seiten eine axiale Eingangsöffnung (21) aufweist, die axial in ihrem zentralen Bereich vorgesehen ist, und die Seiten eine periphere Ausgangsöffnung (30) formen;
wobei die axial durch die axiale Eingangsöffnung (21) zugeführte Flüssigkeit umgeleitet wird und in der radialen Kavitationskammer (18) gemäß verschiedenen radialen Richtungen zur peripheren Ausgangsöffnung (30) strömt;
und wobei die Dicke der Kavitationskammer (18) zwischen den radialen Seiten (11, 19) so gewählt wird, dass sie zwischen dem 0,1-Fachen und dem 0,25-Fachen des Durchmessers der axialen Eingangsöffnung (21) liegt, vorzugsweise das 0,14-Fache ist;
so dass die Bedingungen der Strömung der Flüssigkeit Kavitationsblasen oder -taschen (31) im ersten Teil der radialen Strömung um die zentrale Eingangsöffnung (21) herum erzeugen, und dass die Kavitationsblasen oder -taschen (31) implodieren, ehe sie die periphere Ausgangsöffnung (30) erreichen, um die Verbindung in der Kavitationskammer (18) zumindest teilweise zu behandeln.

2. Verfahren nach Anspruch 1, wobei der Abstand zwischen der Achse (5) der zentralen Eingangsöffnung (21) und der peripheren Öffnung der Kavitationskammer (18) so gewählt wird, dass er größer als der doppelte Durchmesser der zentralen Eingangsöffnung (21) ist.

3. Verfahren nach einem der Ansprüche 1 und 2, wobei das Verhältnis zwischen dem Absolutdruck stromaufwärts vor der Kavitationskammer (18) und dem Druck stromabwärts hinter dieser Kammer zwischen 1,5 und 6 liegt.

4. Vorrichtung zur Behandlung mindestens einer Verbindung, wie eine chemische und/oder organische Verbindung und/oder ein Mikroorganismus, die/der von einer Flüssigkeit transportiert wird, die enthält:
ein erstes Element (3), das eine im Wesentlichen radiale Seite (19) und eine im Wesentlichen axiale Eingangsöffnung (21) der Flüssigkeit aufweist, und ein zweites Element (10), das eine im Wesentlichen radiale Seite (11) aufweist,
wobei die radialen Seiten einander gegenüber angeordnet sind, um zwischen sich einen Raum zu formen, der eine radiale Kavitationskammer (18) formt, die eine periphere Ausgangsöffnung (30) aufweist, wobei die axiale Eingangsöffnung des ersten Elements in einem zentralen Bereich dieser Kavitationskammer (18) gegenüber der radialen Seite (11) des zweiten Elements (10) mündet;
wobei die Dicke der zweiten Kavitationskammer (18) zwischen den radialen Seiten (11, 19) zwischen dem 0,1-Fachen und dem 0,25-Fachen des Durchmessers der axialen Eingangsöffnung (21) liegt, vorzugsweise das 0,14-Fache ist;
so dass die Flüssigkeit, die axial durch die axiale Eingangsöffnung (21) zugeführt wird, im zentralen Eingangsbereich umgeleitet wird und in der radialen Kavitationskammer (18) gemäß verschiedenen radialen Richtungen zur peripheren Ausgangsöffnung (30) strömt, und dass die Bedingungen der Strömung der Flüssigkeit Kavitationsblasen oder -taschen (31) im ersten Teil dieser Strömung um die zentrale Eingangsöffnung (21) herum formen, und dass die Kavitationsblasen oder -taschen (31) implodieren, ehe sie die periphere Ausgangsöffnung (30) erreichen, um die Verbindung zumindest teilweise zu behandeln.

5. Vorrichtung nach Anspruch 4, wobei die die radiale Kavitationskammer (18) begrenzenden radialen Seiten (11, 19) parallel sind.

6. Vorrichtung nach einem der Ansprüche 4 und 5, wobei der Abstand zwischen der Achse (5) der zentralen Eingangsöffnung (21) und der peripheren Öffnung der Kavitationskammer (18) größer ist als der doppelte Durchmesser der zentralen Eingangsöffnung (21).

7. Vorrichtung nach einem der Ansprüche 4 bis 6, wobei die periphere Ausgangsöffnung der radialen Kavitationskammer (18) mit einer Sekundärkammer (124) in Verbindung steht, die mit mindestens einem Ausgangsdurchgang (120) verbunden ist.

8. Vorrichtung nach Anspruch 7, die eine weitere Behandlungseinrichtung (121) enthält, die der Sekundärkammer zugeordnet ist, insbesondere eine Emissionseinrichtung, die eine Ultraviolettstrahlung in der Sekundärkammer erzeugt.

9. Vorrichtung nach einem der Ansprüche 7 bis 8, wobei das erste Element und das zweite Element zwei Wände (201, 202) enthalten, die zwischen sich einen Raum einrichten, wobei eine der Wände eine Vielzahl von Eingangsöffnungen (204) der Flüssigkeit aufweist, und die andere Wand eine Vielzahl von Ausgangsöffnungen (206) aufweist, um in dem Raum und zwischen den Eingangsöffnungen und den Ausgangsöffnungen eine Vielzahl von Kavitationskammern (209) zu formen.

10. Vorrichtung nach Anspruch 9, wobei die Eingangsöffnungen in eine Eingangssammelkammer (205) münden und die Ausgangsöffnungen in eine Ausgangssammelkammer (207) münden, wobei die Wände ringförmig und konzentrisch, vorzugsweise zylindrisch oder konzentrisch, oder flach sein können.

11. Vorrichtung nach einem der Ansprüche 4 bis 10, wobei das erste Element (3) eine Abschrägung am Rand der axialen Eingangsöffnung (21) hat, wobei diese Abschrägung abgerundet ist und einen Radius zwischen dem 0,1- und dem 0,5-Fachen des Abstands der radialen Seiten (11, 19) im zentralen Bereich der Kavitationskammer (18) hat oder kegelstumpfförmig ist, indem sie gemäß einem Winkel zwischen 30° und 60°, vorzugsweise von 45°, und auf einer Höhe gemäß der Achse der axialen Eingangsöffnung (21) zwischen dem 0,1-Fachen und dem 0,5-Fachen des Abstands zwischen den radialen Seiten (11, 19) im zentralen Bereich der Kavitationskammer (18) angeordnet ist.

## Claims

1. Method for treating a compound, such as a chemical and/or organic compound and/or a micro-organism, carried by a liquid,
in which two substantially radial faces (11, 19) arranged opposite each other delimit between them a radial cavitation chamber (18), one of said faces having an axial inlet orifice (21) formed axially in its central part and said faces forming a peripheral outlet opening (30);
in which the liquid supplied axially through the axial inlet orifice (21) is deflected and flows into said radial cavitation chamber (18) in various radial directions toward the peripheral outlet opening (30);
and in which the thickness of said cavitation chamber (18), between said radial faces (11, 19), is selected such that it is between 0.1 and 0.25 times the diameter of said axial inlet orifice (21) and is preferably 0.14;
such that the flow conditions of the liquid generate cavitation bubbles or pockets (31) in the first part of the radial flow, around the central inlet orifice (21) and that the cavitation bubbles or pockets (31) implode before they reach the peripheral outlet opening (30), in order to treat said compound at least partially in said cavitation chamber (18).

2. Method according to Claim 1, in which the distance between the axis (5) of the central inlet orifice (21) and said peripheral opening of said cavitation chamber (18) is selected such that it is more than twice the diameter of said central inlet orifice (21).

3. Method according to either of Claims 1 and 2, in which the ratio between the absolute pressure upstream of said cavitation chamber (18) and the pressure downstream of this chamber is between 1.5 and 6.

4. Device for treating at least one compound, such as a chemical and/or organic compound and/or a micro-organism, carried by a liquid, comprising:
a first element (3) having a substantially radial face (19) and a substantially axial liquid-inlet orifice (21), and a second element (10) having a substantially radial face (11),
in which said radial faces are arranged opposite each other so that they form between them a space forming a radial cavitation chamber (18) having a peripheral outlet opening (30), said axial inlet orifice of the first element opening out into a central part of this cavitation chamber (18) opposite said radial face (11) of the second element (10);
the thickness of said cavitation chamber (18), between said radial faces (11, 19), is between 0.1 and 0.25 times the diameter of said axial inlet orifice (21) and is preferably 0.14;
such that the liquid which is supplied axially through the axial inlet orifice (21) is deflected in the central inlet part and flows into said radial cavitation chamber (18) in various radial directions toward the peripheral outlet opening (30) and such that the flow conditions of the liquid generate cavitation bubbles or pockets (31) in the first part of this flow, around the central inlet orifice (21), and that the cavitation bubbles or pockets (31) implode before they reach the peripheral outlet opening (30), in order to treat said compound at least partially.

5. Device according to Claim 4, in which said radial faces (11, 19) delimiting said radial cavitation chamber (18) are parallel.

6. Device according to either of Claims 4 and 5, in which the distance between the axis (5) of the central inlet orifice (21) and said peripheral opening of said cavitation chamber (18) is more than twice the diameter of said central inlet orifice (21).

7. Device according to any one of Claims 4 to 6, in which said peripheral outlet opening of said radial cavitation chamber (18) communicates with a secondary chamber (124) connected to at least one outlet passage (120).

8. Device according to Claim 7, comprising a different treatment means (121) associated with said secondary chamber, in particular an emitting means generating ultraviolet radiation in said secondary chamber.

9. Device according to any one of Claims 7 to 8, in which the first element and the second element comprise two walls (201, 202) which form a space between them, one of the walls having a plurality of inlet orifices (204) for the liquid and the other wall having a plurality of outlet orifices (206), so as to form a plurality of cavitation chambers (209) in said space and between said inlet orifices and said outlet orifices.

10. Device according to Claim 9, in which said inlet orifices open out into an inlet collecting chamber (205) and the outlet orifices open out into an outlet collecting chamber (207), where said walls can be annular and concentric and are preferably cylindrical or concentric, or flat.

11. Device according to any one of Claims 4 to 10, in which said first element (3) has a bevel on the edge of said axial inlet orifice (21), where this bevel is rounded and has a radius between 0.1 and 0.5 times the distance between said radial faces (11, 19) in the central part of the cavitation chamber (18) or is in the shape of a truncated cone arranged at an angle between 30° and 60°, preferably at 45°, and over a height, in the axis of said axial inlet orifice (21), between 0.1 and 0.5 times the distance between said radial faces (11, 19) in the central part of the cavitation chamber (18).
